# EUROPEAN PATENT SPECIFICATION

(11) **EP 3 401 035 B1**
(45) Date of publication and mention of the grant of the patent: **31.08.2022**
(21) Application number: 16883385.3
(22) Date of filing: 09.12.2016
(51) Int. Cl.: B21D 51/26, B21D 41/04, B21D 43/12, B21D 43/18

(54) **LINEAR APPARATUS FOR FORMING CAN OPENING**
LINEARE VORRICHTUNG ZUM HERSTELLEN EINER DOSENÖFFNUNG
APPAREIL LINÉAIRE POUR LA FORMATION D'OUVERTURE DE BOÎTE MÉTALLIQUE

(30) Priority: 05.01.2016 CN 201610003673
(43) Date of publication of application: 14.11.2018
(73) Proprietor: Suzhou Slac Precision Equipment Co., Ltd, Suzhou, Jiangsu 215164 (CN)
(72) Inventor: WANG, Bingsheng, Suzhou Jiangsu 215164 (CN); KONG, Lingguang, Suzhou Jiangsu 215164 (CN); LIU, Bingxin, Suzhou Jiangsu 215164 (CN)
(74) Representative: Bayramoglu et al.
(86) International application number: PCT/CN2016/109132
(87) International publication number: WO 2017/118259

(56) References cited:
- CN-A- 1 045 044
- CN-A- 102 574 193
- CN-A- 105 499 428
- CN-U- 201 807 676
- CN-U- 205 324 547
- GB-A- 1 433 963
- JP-A- 2008 043 965
- US-A1- 2007 166 131
- US-A1- 2012 042 708

## Description

### TECHNICAL FIELD

The present invention relates to an apparatus for forming can openings, the formation of the can openings means that the machining in the necking formation working procedures is completed at the can opening parts of metal cans, and the machining of subsequent working procedures such as flanging, hemming or flaring can be further expanded and added on the basis of the necking working procedure.

### BACKGROUND

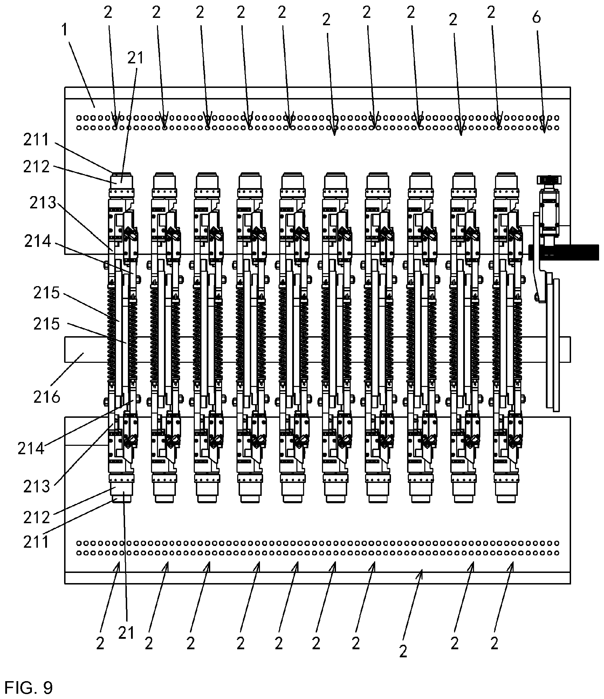

Metal cans, such as pop-top cans, are generally divided into aluminum cans and iron cans, and each can structurally consists of a can body and a cover body (easy-pull cover). In order to reduce the cost of the easy-pull covers and simultaneously facilitate packaging and transportation, the necking working procedure may be carried out on the can bodies of the metal cans circulating on the market at present, and the necking structure refers to nine positions as shown in FIG. 9. Moreover, in order to cover can bodies, a flanging working procedure is possibly needed on the basis of necking, and for bottles and cans, the working procedures such as flaring and hemming are further needed.

The necking formation technology is mainly based on multi-station mold necking, namely the diameter of a can opening is gradually decreased through a plurality of mold extrusion working procedures until finally required necking dimensions are reached. The popular can neck on the market which is decreased into 202 from 211 and are 0.148 mm in thickness is taken as an example, and necking can be completed with the need of twelve necking working procedures.

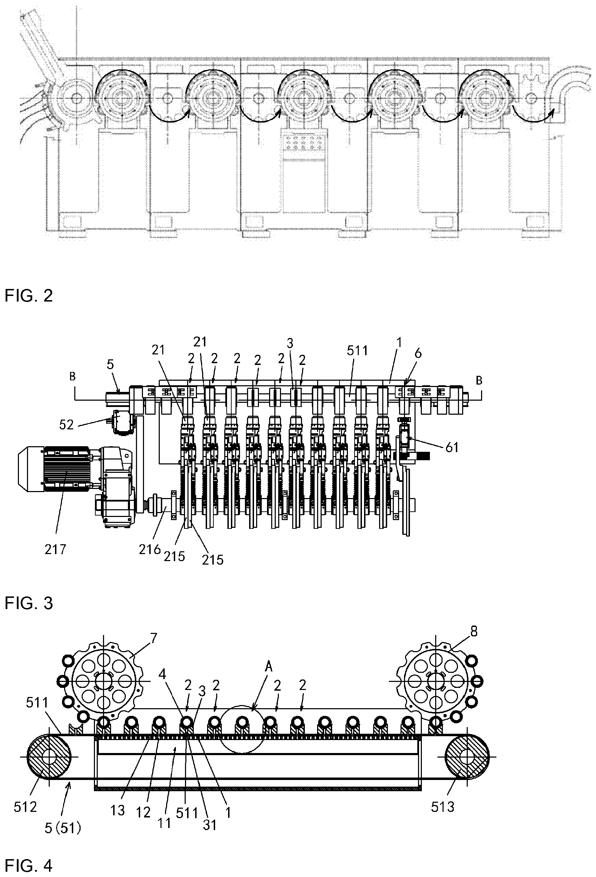

In the prior art, the necking apparatus is as shown in FIG. 2, the operation route of a can 1 is zigzag, the whole necking formation apparatus consists of a plurality of modular formation units, each unit consists of a plurality of stations, such as eight stations, ten stations, twelve stations or sixteen stations, which are all used for completing the same formation working procedure, the station of each formation unit consists of a set of push rod assemblies and mold punch assemblies which are fundamentally the same, the neck formation working procedure of the can is completed under the control of space cams, then the can is fed to the next formation unit by a conveying star wheel until the dimensions of the can opening part reach required shapes and dimensions, and finally the can after the neck formation is completed is fed out of the formation apparatus through an output star wheel. The most main characteristic of the apparatus is high production speed, but the disadvantage is that each unit is high in cost, particularly, for more and more popular bottles and cans, more than 30 working procedures, or even more than 40 working procedures are needed for necking, so that the acquisition cost of the whole set of apparatus is fairly high. However, for the production requirement of bottles and cans or aerosol cans, due to the facts that the production lot is low and high production speed is not needed, but lower cost is needed, a requirement for low-speed and low-cost apparatuses appears.

US-A-2012/0042708 ,on which the preamble of claim 1 is based, relates to a linear apparatus for forming can openings.

### SUMMARY

The present disclosure provides a linear apparatus for forming the can openings so as to meet the requirement of low-cost can opening forming apparatuses on the market. The present invention provides a linear apparatus for forming the can openings according to independent claim 1.

A first technical scheme does not belong to the present invention is as follows: a linear apparatus for forming can openings comprises a working tabletop; a plurality of necking machining stations are arranged on the working tabletop along a linear line; a can body positioning groove for positioning a can body is formed in each necking machining station, and the can body positioning grooves are arranged in parallel relative to the axis of the positioned can body; a vacuum adsorption hole is formed in the interior of each can body positioning groove, a vacuum chamber is arranged below the working tabletop, and the vacuum chamber communicates with the vacuum adsorption holes (31); a necking machining device is correspondingly arranged on each necking machining station, and acts on the can opening part of the can body positioned in the can body positioning groove; and the necking machining device comprises a necking internal mold, a necking external mold sleeving the exterior of the necking internal mold and a necking driving device for driving the necking internal mold, the necking external mold and the can body to perform relative movement; the linear apparatus for forming the can openings also comprises a moving device, and the moving device acts on the can body positioned in the can body positioning groove and is used for moving the can body on the stations backward by one station.

In the scheme, each necking driving device comprises an external mold punch connected with the necking external mold, an internal mold punch connected with the necking internal mold and two disc cams; the disc cams are in one-to-one correspondence and transmission connection with the external mold punch and the internal mold punch; the disc cams sleeve a cam shaft; one end of the cam shaft is in transmission connection with a motor; and each necking external mold and the corresponding necking internal mold are driven by the motor to move and return towards the can opening body of the corresponding can body through the corresponding disc cams, the corresponding external mold punch and the internal mold punch.

Furthermore, the two disc cams are cams working by using an outer contour surface or a flange contour surface; rollers are arranged on the external mold punch and the internal mold punch corresponding to the cams; and the rollers keep contact with the working surfaces of the corresponding cams through spring force to form transmission connection. Or, the two disc cams are disc groove cams; rollers are arranged on the external mold punch or the internal mold punch corresponding to the cams; the rollers are embedded into grooves of the disc groove cams to form transmission connection.

In the scheme, each necking driving device comprises a mold punch connected with the corresponding necking internal mold and the corresponding necking external mod and a can body punch acting on the corresponding can body; one liner power device drives the necking internal mold and the necking external mold to move through the mold punch, the other linear power device drives the can body through the can body punch so that the can body, the necking internal mold and the necking external mold perform relative movement.

In the scheme, the moving device consists of a conveyer belt device and an intermittent driving device, the conveyer belt device comprises a closed-loop conveyer belt and a driving wheel and a driven wheel for driving and supporting the closed-loop conveyer belt, a section of linear belt surface on the closed-loop conveyer belt serves as a conveying surface to be overlapped and arranged on the working tabletop, and the can body positioning grooves are fixedly arranged on the conveying surface of the closed-loop conveyer belt; moreover, a through hole is formed in each vacuum absorption hole of the corresponding can body positioning groove on the closed-loop conveyer belt, and a through hole is also formed in the position of the can body positioning groove on the corresponding necking machining station on the working worktop, so that the through hole, through the closed-loop conveyer belt, in the vacuum absorption hole and the through hole in the working tabletop communicate with the vacuum chamber when the can body positioning groove is located at the corresponding necking machining station; and the intermittent driving device is in driving connection with the driving wheel, and is used for driving the can body positioning grooves and the can bodies positioned in the can body positioning grooves on the stations backward by one station through the closed-loop conveyer belt.

Furthermore, a plurality of through holes are also formed in the positions among the necking machining stations on the working tabletop, so that the vacuum adsorption holes in the can body positioning grooves also communicate with the vacuum chamber through the through holes in the closed-loop conveyer belt and the through holes in the working tabletop when the can body positioning grooves are located at the positions among the necking machining stations.

In the scheme, the moving device comprises a moving acting body; the moving acting body is arranged above the can body positioning grooves of the necking machining stations in a spanning manner, and each can body positioned in the corresponding can body positioning groove on the moving acting body is provided with a fetching suction cup or a fetching adsorption groove; and moreover, the moving acting body is provided with a moving device to drive the moving acting body to be capable of moving relative to the working tabletop along the arrangement direction of the necking machining stations or the vertical direction respectively.

In order to achieve the purpose, the second technical scheme adopted in the present invention is as follows: a linear apparatus for forming the can openings comprises a working tabletop; two rows of necking machining stations are arranged on the working tabletop along two linear lines parallel to each other, a can body positioning groove for positioning a can body is formed in each necking machining station, and the can body positioning grooves are arranged in parallel in terms of the axes of the can bodies positioned in the can body positioning grooves; a vacuum adsorption hole is formed in the interior of each can body positioning groove, a vacuum chamber is arranged below the working tabletop, and the vacuum chamber communicates with the vacuum adsorption holes; a necking machining device is correspondingly arranged on each necking machining station, the necking machining devices are positioned between the can body positioning grooves on the two rows of necking machining stations, and the necking machining devices on the two rows of necking machining stations are in one-to-one correspondence; each necking machining device comprises a necking internal mold, a necking external mold sleeving the exterior of the necking internal mold, an external mold punch connected with the necking internal mold and an internal mold punch connected with the necking internal mold; two disc cams are arranged between a pair of necking machining devices correspondingly in the two rows of necking machining stations, the two disc cams are isometric disc cams, in the two isometric disc cams, one isometric disc cam corresponds to and is in transmission connection with the external mold punches in the two necking machining devices to form the isometric disc cam, and the other isometric disc cam corresponds to and is in transmission connection with the internal mold punches in the two necking machining devices to form the isometric disc cam; moreover, the disc cams sleeve a cam shaft, one end of the cam shaft is in transmission connection with a motor, and each necking external mold and the corresponding necking internal mold of the two necking machining devices correspondingly on the two rows of necking machining stations are simultaneously driven by the motor to move and return towards the can body inside the can body positioning groove of the respective necking machining station through the disc cams; and the linear apparatus for forming the can openings also comprises a moving device, and the moving device acts on the can bodies positioned in the can body positioning grooves and is used for moving the can bodies on the stations backward by one station.

Due to the application of the technical scheme, compared with the prior art, the linear apparatus for forming the can openings has the following advantages: the linear apparatus has the advantages of simple structure, low cost, small occupied space, convenient maintenance and the like, and is an optimal choice for can body manufacturers with low production speed requirement; and besides, the linear apparatus can also be convenient to expand at random, the stations are increased/decreased, for example, flanging machining stations, hemming machining stations or flaring machining stations can be added at the back of the necking machining stations according to requirements.

### BRIEF DESCRIPTION OF THE DRAWINGS

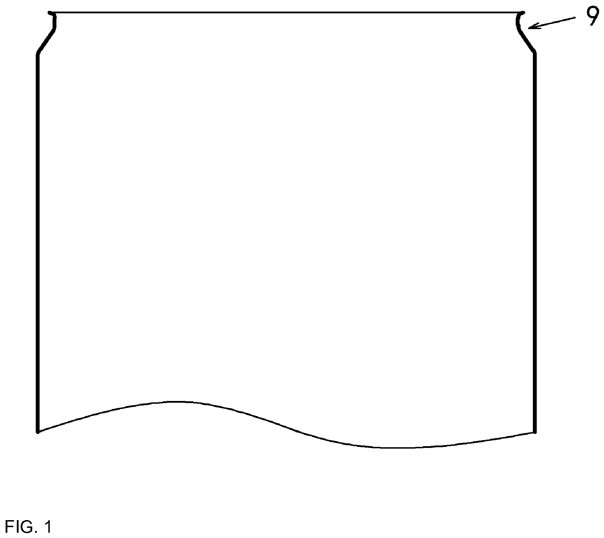

FIG. 1 is a structure diagram of a can body after necking machining;
FIG. 2 is a schematic diagram in the prior art;
FIG. 3 is a main view schematic diagram of a structure according to a first example not belonging to the
present invention;
FIG. 4 is a B-B section diagram of FIG. 3;
FIG. 5 is an amplified schematic diagram of a position in FIG. 4;
FIG. 6 is a schematic diagram of an interconnecting structure of a necking internal mold, a necking external mold, an internal mold punch and an external mold punch of a necking machining device in the first example not belonging to the present invention;
FIG. 7 is a solid diagram of the first example not belonging to the present invention;
FIG. 8 is a structure diagram of the second example not belonging to the present invention; and
FIG. 9 is a configuration diagram of the necking machining device on each necking machining station in the embodiment of the present invention.

In the accompanying diagrams: 1, working tabletop; 11, vacuum chamber; 12, through hole; 13, through hole; 2, necking machining station; 21, necking machining device; 211, necking internal mold; 212, necking external mold; 213, external mold punch; 214, internal mold punch; 215, disc cam; 216, cam shaft; 217, motor; 3, can body positioning groove; 31, vacuum adsorption hole; 4, can body; 5, moving device; 51, conveyer belt device; 511, closed-loop conveyer belt; 5111, through hole; 512, driving wheel; 513, driven wheel; 52, intermittent driving device; 53, moving acting body; 531, fetching adsorption groove; 6, flanging machining station; 61, flanging machining device; 7, charging star wheel; 8, discharging start wheel; and 9, necking position.

### DESCRIPTION OF THE EMBODIMENTS

The present invention shall be further described in conjunction with the drawings ,examples not belonging to the present invention and to an embodiment.

Example 1 not belonging to the invention: referring to FIG. 3 to FIG. 7, a linear apparatus for forming can openings comprises a working tabletop 1, and a plurality of necking machining stations 2 are arranged on the working tabletop 1 along a linear line. As shown in FIG. 3 and FIG. 4, specifically, there are two to ten necking machining stations, each necking machining station 2 corresponds to one necking machining working procedure, namely there are ten necking machining working procedures, and a necking is formed by extruding and machining the can opening of each can body 4 through the ten necking machining working procedures. The quantity of the necking machining stations 2 optionally changes according to actual requirements.

As shown in FIG. 3 to FIG. 7, a can body positioning groove 3 for positioning a can body 4 is formed in each necking machining station 2, and the can body positioning grooves 3 are arranged in parallel in terms of the axes of the can bodies 4 positioned in the can body positioning grooves; a vacuum adsorption hole 31 is formed in the interior of each can body positioning groove 3, a vacuum chamber 11 is arranged below the working tabletop 1, and the vacuum chamber 11 communicates with the vacuum adsorption holes 31.

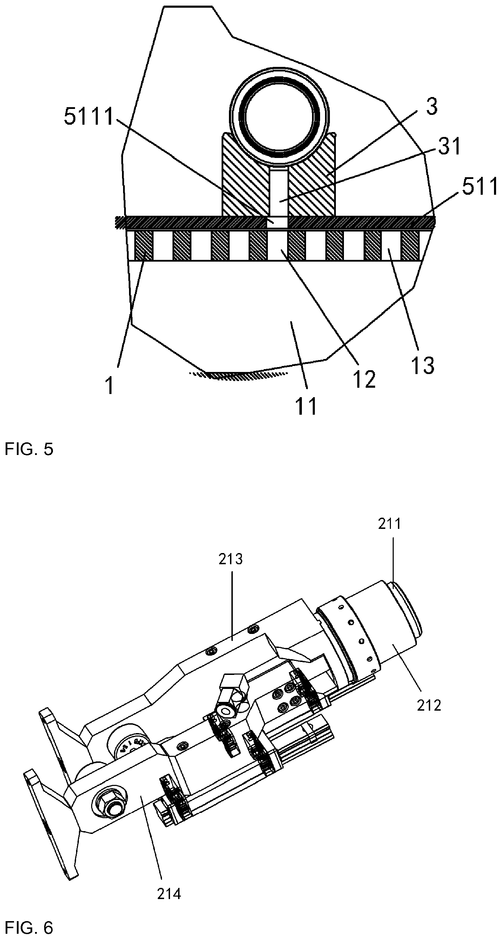

As shown in FIG. 3 to FIG. 7, a necking machining device 21 is correspondingly arranged on each necking machining station 2, and each necking machining device 21 acts on the can opening part of the can body 4 positioned in the corresponding can body positioning groove 3; each necking machining device 21, referring to FIG. 3 to FIG. 7, referring to FIG. 6 in detail, comprises a necking internal mold 211, a necking external mold 212 sleeving the exterior of the necking internal mold 211 and a necking driving device for driving the necking internal mold 211, the necking external mold 212 and the can body 4 to perform relative movement; each necking driving device comprises an external mold punch 213 connected with the necking external mold 212, an internal mold punch 214 connected with the necking internal mold 211 and two disc cams 215; the disc cams 215 are in one-to-one correspondence and transmission connection with the external mold punch 213 and the internal mold punch 214; the disc cams 215 sleeve a cam shaft 216; one end of the cam shaft 216 is in transmission connection with a motor 217; and each necking external mold 212 and the corresponding necking internal mold 211 are driven by the motor 217 to move and return towards the can opening body of the corresponding can body 4 through the corresponding disc cams 215, the corresponding external mold punch 213 and the internal mold punch 214.

Referring to FIG. 3 to FIG. 7, the disc cams 215 of the necking machining device 21 on each necking machining station 2 sleeve the same cam shaft 216 and are driven by the same motor 217, in a preferable scheme which is mostly economical, but actually the disc cams 215 of the necking machining device 21 on each necking machining station 2 can be driven by independent power devices respectively.

Moreover, in FIG. 3 to FIG. 7, the disc cams 215 are driven by the motor to drive the necking external molds 212 and the necking internal molds 211 to move, actually, the driving is feasible in other existing driving manners, for example, the necking external molds 212 and the necking internal molds 211 are driven by the motor to move through a crank block mechanism.

As shown in FIG. 3 to FIG. 7, the two disc cams 215 are cams working by using an outer contour surface or a flange contour surface, and the cams are in transmission connection through the external mold punch 213 or the internal mold punch 214 corresponding to rollers in a spring force contact manner. Certainly, in reality, the change is feasible for the scheme of the cams, the disc cams can also adopt disc groove cams, rollers are arranged on the external mold punch 213 or the internal mold punch 214 corresponding to the cams, and the rollers are embedded into the grooves of the disc groove cams to form transmission connection. The disc cams 215 are used for driving in example 1 exposed above, the structure is simple, the machining is easy, and the cost is greatly reduced.

The linear apparatus for forming the can openings in example 1 also comprises a moving device 5, and the moving device 5 acts on the can bodies 4 positioned in the can body positioning grooves 3 and is used for moving the can bodies 4 on the stations backward by one station. Specifically, referring to FIG. 3, FIG. 4 and FIG. 7, the moving device 5 consists of a conveyer belt device 51 and an intermittent driving device 52, the conveyer belt device 51 comprises a closed-loop conveyer belt 511 and a driving wheel 512 and a driven wheel 513 for driving and supporting the closed-loop conveyer belt 511, a section of linear belt surface on the closed-loop conveyer belt 511 serves as a conveying surface to be overlapped and arranged on the working tabletop 1, and the can body positioning grooves 3 are fixedly arranged on the conveying surface of the closed-loop conveyer belt 511. Moreover, a through hole 5111 is formed in each vacuum adsorption hole 31 of the corresponding can body positioning groove 3 on the closed-loop conveyer belt 511, and a through hole 12 is also formed in the position of the can body positioning groove 3 on the corresponding necking machining station 2 on the working worktop 1, so that the through hole 5111, through the closed-loop conveyer belt 511, in the vacuum adsorption hole 31 and the through hole 12 in the working tabletop 1 communicate with the vacuum chamber 11 when the can body positioning groove 3 is located at the corresponding necking machining station 2, as shown in FIG. 5. The intermittent driving device 52 is in driving connection with the driving wheel 512, and is used for driving the can body positioning grooves 3 and the can bodies 4 positioned in the can body positioning grooves 3 on the stations backward by one station through the closed-loop conveyer belt 511.

Attention, FIG. 3, FIG. 4 and FIG. 7 illustrate the can body positioning grooves 3 in the conveying surface of the closed-loop conveyer belt 511, but the can body positioning grooves 3 in other parts of the closed-loop conveyer belt 511 are omitted, actually, the can body positioning grooves 3 are fixedly formed in the belt surface of the whole closed-loop conveyer belt 511 at intervals.

The intermittent driving device 52 can be a servo motor, and can also be realized by existing various mechanical intermittent mechanisms driven by a power source.

Referring to FIG. 3, FIG. 4 and FIG. 7, as shown in FIG. 5, a plurality of through holes 13 are also formed in the positions among the necking machining stations 2 on the working tabletop 1, so that the vacuum adsorption holes 31 in the can body positioning grooves 3 also communicate with the vacuum chamber 11 through the through holes 5111 in the closed-loop conveyer belt 511 and the through holes 12 in the working tabletop 1 when the can body positioning grooves 3 are located at the positions among the necking machining stations 2. With the design, each can body 4 can be positioned inside the corresponding can body positioning groove 3 by suffering from the effect of adsorption force in the moving process from the previous station to the next station, so that the shifting condition in the moving process is avoided.

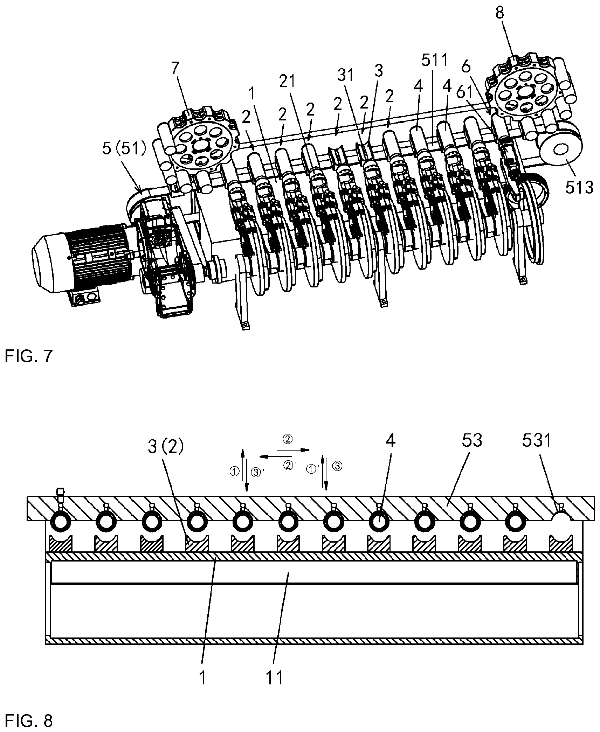

Moreover, referring to FIG. 3, FIG, 4 and FIG. 7, a flanging machining station 6 is further arranged at the back of each necking machining station 2 on the working tabletop 1, a flanging machining device 61 is arranged on the corresponding flanging machining station 6, and the flanging machining device consists of a flanging mold and a driving device for driving the flanging mold to move. A station with an extended function added at the back of a necking working procedure in the embodiment is added on the flanging machining station 6, and the actual station with the extended function can also be a hemming station and also can be a flaring station, which is selected according to actual requirements of a user.

During the operation in the example 1 not belonging to the invention exposed above, there is no can body 4 on each necking machining station 2 or each flanging machining station 6 initially. After the apparatus begins to operate, each can body 4 is conveyed into the first can body positioning groove 3 in the head end of the conveying surface of the conveyer belt 511 from a charging star wheel 7, due to the effect of the vacuum chamber 11, the can body 4 is firmly positioned in the can body positioning groove 3, right now, the conveyer belt 511 moves a fixed phase backwards, the can body positioning groove 3 and the can body positioned in the corresponding can body positioning groove 3 move onto the first necking machining station, then, the necking machining device 21 at the station acts on the can body to complete machining in a first necking working procedure, then, the conveyer belt 511 moves a fixed phase backwards to move the can body onto a second necking machining station 2 for carrying out machining in a second necking working procedure, the can body 4 completes subsequent machining in all necking working procedures in the manner similarly, then, the can body 4 moves onto the flanging machining station 6 to complete machining in a flanging machining working procedure by the flanging machining device 61, and finally, the can body 4 is discharged by the discharging star wheel 8. The machining process of one can body 4 is described above, and actually, during the machining of the one can body 4, other can bodies are also placed into the can body positioning grooves 3 at the back of the can body 4 in sequence, so that a plurality of can bodies are machined simultaneously in a grading manner.

In the process, the action process of the necking machining devices 21 on the necking machining stations 2 is specifically as follows: after speed reduction of the motor 217 through a speed reducer, the disc cams 215 of the necking machining devices 21 of all necking machining stations 2 are driven to rotate through the cam shaft 216 simultaneously, and then the disc cams 215 finally drive the necking internal molds 211 and the necking external molds 212 to act through the internal mold punches 214 and the external mold punches 213. The specific form of operation during necking machining is as follows: the can body 4 is adsorbed by the vacuum chamber 11 for fixation, firstly the necking internal molds 211 and the necking external mold 212 move towards the can opening position of the can body 4 together, the necking internal mold 211 stops after the necking internal mold 211 enters into the cap opening at a certain distance, the necking external mold 212 continuously goes forward to extrude the can opening, and after the necking formation is completed, the necking internal mold 211 and the necking external mold 212 get out of the can opening.

The device of example 1 not belonging to the invention is simple in structure, low in cost, small in occupied space and convenient in maintenance, and is an optimal choice of can body manufactures with low production speed requirements.

In example 1, the necking driving device is illustrated, in reality, other schemes can be further adopted for the necking driving devices, for example, each necking driving device comprises an internal mold punch connected with the necking internal mold 211 and a can body punch acting on the can body 4; one linear power device drives the necking internal mold 211 to move through the internal mold punch, the other linear power device drives the can body 4 to move through the can body punch, but the necking external mold 212 is fixed, so that the can body 4, the necking internal mold 211 and the necking external mold 212 perform relative movement.

Second example, not belonging to the invention: referring to FIG. 8, a linear apparatus for forming the can openings comprises a plurality of necking machining stations 2 are arranged on the working tabletop 1 along a linear line, a can body positioning groove 3 for positioning a can body 4 is formed in each necking machining station 2, and the can body positioning grooves 3 are arranged in parallel in terms of the axes of the can bodies 4 positioned in the can body positioning grooves (3); the difference from the first example is as follows: the can body positioning grooves 3 are directly formed in the working tabletop 1, the moving device 5 comprises a moving acting body 53, the moving acting body 53 is arranged above the can body positioning grooves 3 of the necking machining stations 2 in a spanning manner, and each can body 4 positioned in the corresponding can body positioning groove 3 on the moving acting body 53 is provided with a fetching suction cup or a fetching adsorption groove 531; and moreover, the moving acting body 53 is provided with a moving device to drive the moving acting body 53 to be capable of moving relative to the working tabletop 1 along the arrangement direction of the necking machining stations 2 or the vertical direction respectively. The specific moving form of the moving acting body 53 is as follows: shown as arrows in FIG. 8, the moving acting body 53 firstly moves upwards, then moves backwards to a station position, then moves downwards, then moves upwards, then resets forwards, and then moves downwards, namely the moving acting body 53 is used for moving the can bodies 4 on the stations backwards by one station.

Other aspects are the same as the first example, and are not described in detail herein.

Embodiment of the invention:
referring to FIG. 9, in a linear apparatus for forming the can openings according to the invention, two rows of necking machining stations 2 are arranged on the working tabletop 1 along two linear lines parallel to each other, a can body positioning groove 3 (omitted and unfigured in FIG. 9) for positioning a can body is formed in each necking machining station, and the can body positioning grooves 3 are arranged in parallel in terms of the axes of the can bodies 4 positioned in the can body positioning grooves 3; a vacuum adsorption hole 31 (omitted and unfigured in FIG. 9) is formed in the interior of each can body positioning groove 3, a vacuum chamber 11 is arranged below the working tabletop 1, and the vacuum chamber 11 communicates with the vacuum adsorption holes 31.

Referring to FIG. 9, a necking machining device 21 is correspondingly arranged on each necking machining station 2, the necking machining devices 21 are positioned between the can body positioning grooves 3 on the two rows of necking machining stations 2, and the necking machining devices 21 on the two rows of necking machining stations 2 are in one-to-one correspondence.

Each necking machining device 21 comprises a necking internal mold 211, a necking external mold 212 sleeving the exterior of the necking internal mold 211, an external mold punch 213 connected with the necking internal mold 212 and an internal mold punch 214 connected with the necking internal mold 211; two disc cams 215 are arranged between a pair of necking machining devices 21 correspondingly in the two rows of necking machining stations 2, and the two disc cams 215 are isometric disc cams. In the two isometric disc cams, one isometric disc cam 215 corresponds to and is in transmission connection with the external mold punches 213 in the two necking machining devices 21, and the other isometric disc cam 215 corresponds to and is in transmission connection with the internal mold punches 214 in the two necking machining devices 21. Moreover, the disc cams 215 sleeve a cam shaft 216, one end of the cam shaft 216 is in transmission connection with a motor 217, and each necking external mold 212 and the corresponding necking internal mold 211 of the two necking machining devices 21 correspondingly on the two rows of necking machining stations 2 are simultaneously driven by the motor 217 to move and return towards the can body 4 inside the can body positioning groove 3 of the respective necking machining station 2 through the disc cams 215.

The disc cams 215 are isometric disc cams, the characteristic of the isometric disc cams decides that the tensile force of springs provided for a servo device is constant in the whole working cycle, the characteristic also guarantees the stability of the cams during the operation of the servo system so as to allow the cams to operate at a preferable speed.

The linear apparatus for forming the can openings in the embodiment also comprises a moving device 5, the moving device 5 acts on the can bodies 4 positioned in the can body positioning grooves 3 and is used for moving the can bodies 4 on the stations backward by one station, and the specific structure and change of the moving device 5 are the same as those in the first example and the second example.

The above embodiment only illustrate the technical conceptions and characteristics of the present invention, and aim to enable persons familiar with the technology to understand the content of the present invention and perform the assessment, but not to limit the protective scope of the present invention. All equivalent changes or modifications for the spiritual natures of the present invention should be contained in the protective scope of the present invention defined in the appended claim.

## Claims

1. A linear apparatus for forming the can openings, comprising a working tabletop (1); two rows of necking machining stations (2) are arranged on the working tabletop (1) along two linear lines parallel to each other, a can body positioning groove (3) for positioning a can body is formed in each necking machining station, and the can body positioning grooves (3) are arranged in parallel in terms of the axes of the can bodies (4) positioned in the can body positioning grooves (3); a vacuum adsorption hole (31) is formed in the interior of each can body positioning groove (3), a vacuum chamber(11) is arranged below the working tabletop (1), and the vacuum chamber (11) communicates with the vacuum adsorption holes (31); a necking machining device (21) is correspondingly arranged on each necking machining station (2), the necking machining devices (21) are positioned between the can body positioning grooves (3) on the two rows of necking machining stations (2), and **characterized in that** the necking machining devices (21) on the two rows of necking machining stations (2) are in one-to-one correspondence; each necking machining device (21) comprises a necking internal mold (211), a necking external mold (212) sleeving the exterior of the necking internal mold (211), an external mold punch (213) connected with the necking internal mold (212) and an internal mold punch (214) connected with the necking internal mold (211); two disc cams (215) are arranged between a pair of necking machining devices (21) correspondingly in the two rows of necking machining stations (2), the two disc cams (215) are isometric disc cams, in the two isometric disc cams, one isometric disc cam corresponds to and is in transmission connection with the external mold punches (213) in the two necking machining devices (21), and the other isometric disc cam corresponds to and is in transmission connection with the internal mold punches (214) in the two necking machining devices (21); moreover, the disc cams (215) sleeve a cam shaft(216), one end of the cam shaft (216) is in transmission connection with a motor (217), and each necking external mold (212) and the corresponding necking internal mold (211) of the two necking machining devices (21) correspondingly on the two rows of necking machining stations (2) are simultaneously driven by the motor(217) to move and return towards the can body (4) inside the can body positioning groove (3) of the respective necking machining station (2) through the disc cams (215); and the linear apparatus for forming the can openings also comprises a moving device (5), and the moving device (5) acts on the can bodies (4) positioned in the can body positioning grooves (3) and is used for moving the can bodies (4) on the stations backward by one station.

## Patentansprüche

1. Lineareinrichtung zum Bilden von Dosenöffnungen, umfassend einen Arbeitstisch (1); zwei Reihen von Halsbildungsmaschinenstationen (2), die an dem Arbeitstisch (1) in zwei linearen, zueinander parallelen Linien angeordnet sind, wobei eine Dosenkörperpositionierungsnut (3) zum Positionieren eines Dosenkörpers in jeder Halsbildungsmaschinenstation gebildet ist und die Dosenkörperpositionierungsnuten (3) in Bezug auf Achsen der Dosenkörper (4), die in den Dosenkörperpositionierungsnuten (3) positioniert sind, parallel angeordnet sind; ein Vakuumansaugloch, das (31) im inneren jeder Dosenkörperpositionierungsnut (3) gebildet ist, wobei eine Vakuumkammer (11) unter dem Arbeitstisch (1) angeordnet ist und die Vakuumkammer(11) mit den Vakuumansauglöcher (31) in Verbindung steht; eine Halsbearbeitungsvorrichtung (21), die entsprechend an jeder Halsbildungsmaschinenstation (2) angeordnet ist, wobei die Halsbearbeitungsvorrichtungen (21) zwischen den Dosenkörperpositionierungsnuten (3) an den zwei Reihen von Halsbildungsmaschinenstationen (2) positioniert sind, und **dadurch gekennzeichnet, dass** die Halsbearbeitungsvorrichtungen (21) an den zwei Reihen von Halsbildungsmaschinenstationen (2) einander eins zu eins entsprechen; jede Halsbearbeitungsvorrichtung (21) eine Halsbildungsinnenform (211), eine Halsbildungsaußenform (212), die von außen auf die Halsbildungsinnenform (211) gesetzt ist, ein Außenformpresswerkzeug (213), das mit der Halsbildungsinnenform (212) verbunden ist, und ein Innenformpresswerkzeug (214), das mit der Halsbildungsinnenform (211) verbunden ist, umfasst; zwei Scheibennocken (215) zwischen einem Paar Halsbearbeitungsvorrichtungen (21) jeweils entsprechend in den zwei Reihen von Halsbildungsmaschinenstationen (2) angeordnet sind, wobei die zwei Scheibennocken (215) isometrische Scheibennocken sind, wobei bei den zwei isometrischen Scheibennocken, ein isometrischer Scheibennocken den Außenformpresswerkzeugen (213) in den zwei Halsbearbeitungsvorrichtungen (21) entspricht und mit ihnen in Übertragungsverbindung steht, und der andere isometrische Scheibennocken den Innenformpresswerkzeugen (214) in den zwei Halsbearbeitungsvorrichtungen (21) entspricht und mit ihnen in Übertragungsverbindung steht; wobei die Scheibennocken (215) ferner auf eine Nockenwelle (216) gesetzt sind, ein Ende der Nockenwelle (216) in Übertragungsverbindung mit einem Motor (217) steht und jede Halsbildungsaußenform (212) und die entsprechende Halsbildungsinnenform (211) der zwei Halsbearbeitungsvorrichtungen (21) jeweils entsprechend in den zwei Reihen von Halsbildungsmaschinenstationen (2) gleichzeitig durch den Motor (217) angetrieben werden, sodass sie sich bewegen und durch die Scheibennocken (215) zu dem Dosenkörper (4) in der Dosenkörperpositionierungsnut (3) der jeweiligen Halsbildungsmaschinenstation (2) zurückkehren; und die Lineareinrichtung zum Bilden der Dosenöffnungen außerdem eine Bewegungsvorrichtung (5) umfasst, wobei die Bewegungsvorrichtung (5) auf die Dosenkörper (4) in den Dosenkörperpositionierungsnuten (3) einwirkt und zum Bewegen der Dosenkörper (4) an den Stationen um eine Station zurück dient.

## Revendications

1. Un appareil linéaire pour former les ouvertures de conserves, comprenant un dessus de table de travail (1); deux rangées de stations d'usinage de rétrécissement (2) sont agencées sur le dessus de table de travail (1) en lignes linaires mutuellement parallèles, et une gorge de positionnement de corps de conserve (3) pour positionner un corps de conserve est formée dans chaque station d'usinage de rétrécissement, et les gorges de positionnement de corps de conserve (3) sont agencées en parallèle en termes d'axe de corps de conserve (4) positionnés dans les gorges de positionnement de corps de conserve (3); un trou d'absorption de vide (31) est formé à l'intérieur de chaque gorge de positionnement de corps de conserve (3), une chambre de vide (11) est agencée en dessous du dessus de table de travail (1), et la chambre de vide (11) communique avec les trous d'absorption de vide (31) ; un dispositif d'usinage de rétrécissement (21) est agencé de façon correspondante sur chaque station d'usinage de rétrécissement (2), les dispositifs d'usinage de rétrécissement (21) étant positionnés entre les gorges de positionnement de corps de conserve (3) sur les deux rangées de station d'usinage de rétrécissement (2), et **caractérisé en ce que** les dispositifs d'usinage de rétrécissement (21) des deux rangées de stations d'usinage de rétrécissement (2) sont en correspondance un-à-un; chaque dispositif d'usinage de rétrécissement (21) comprend un moule interne de rétrécissement (211), un moule externe de rétrécissement (212) emmanché sur l'extérieur du moule interne de rétrécissement (211), un poinçon de moule externe (213) relié au moule externe de rétrécissement (212) et un poinçon de moule interne (214) relié au moule interne de rétrécissement (211) ; deux cames de disque (215) sont agencées entre une paire de dispositifs d'usinage de rétrécissement (21) de façon correspondante dans les deux rangées de stations d'usinage de rétrécissement (2), les deux cames de disque (215) sont des cames de disque isométrique, dans les deux cames de disque isométrique, une came de disque isométrique correspond à et est en connexion de transmission avec les poinçons de moule externe (213) dans les dispositifs d'usinage de rétrécissement (21), et l'autre came de disque isométrique correspond à et est en connexion de transmission avec les poinçons de moule interne (214) dans les dispositifs d'usinage de rétrécissement (21) ; en outre, les cames de disque (215) sont emmanchées sur un arbre à came (216), une extrémité de l'arbre à came (216) est en connexion de transmission avec un moteur (217), et chaque moule externe de rétrécissement (212) et moule interne de rétrécissement correspondant (211) des deux dispositifs d'usinage de rétrécissement (21) de façon correspondante sur les deux rangées de stations d'usinage de rétrécissement (2) sont simultanément entraînés par le moteur (217) pour se déplacer et revenir vers le corps de conserve (4) à l'intérieur de la gorge de positionnement de corps de conserve (3) de la station d'usinage de rétrécissement respective (2) via les cames de disque (215) ; et l'appareil linéaire pour former les ouvertures de conserve comprend également un dispositif de déplacement (5), et le dispositif de déplacement (5) agit sur les corps de conserve (4) positionnés dans la gorge de positionnement de corps de conserve (3) et est utilisé pour déplacer les corps de conserve (4) sur les stations vers l'arrière à raison d'une station.
